# EUROPEAN PATENT APPLICATION

(11) **EP 3 663 996 A1**
(43) Date of publication of application: **10.06.2020**
(21) Application number: 18842141.6
(22) Date of filing: 28.07.2018
(51) Int. Cl.: G06Q 10/06, G06F 9/46

(54) **TRANSACTION PROCESSING MANAGEMENT METHOD IN MANAGEMENT SYSTEM**

(30) Priority: 31.07.2017 CN 201710644093
(71) Applicant: Chengdu Qianniucao Information Technology Co., Ltd, Chengdu, Sichuan 610000 (CN)
(72) Inventor: CHEN, Dazhi, Meishan, Sichuan 620000 (CN)
(74) Representative: Bandpay & Greuter
(86) International application number: PCT/CN2018/097711
(87) International publication number: WO 2019/024832

(57) **Abstract**

A method for managing transaction processing in a management system is disclosed in the present invention, including: a transaction submitter appoints a user/an employee to process; otherwise, a transaction-processing request is assigned to a preset assigner, and the assigner appoints an assignee user/employee to process according to the content of the transaction-processing request submitted by the transaction submitter. The present invention provides a transaction submitter with a function to assign a certain user/employee to process, and the transaction cannot be transferred, thus preventing the privacy of the transaction from leaking, and ensuring that the transaction is fairly processed. A role having the nature of an independent individual is used as the assigner. When the assigner resigns or is transferred from the post, it only needs to relate a new assigner to the assigner role, and then all current transactions can be gotten automatically, thus reducing the workloads of transaction handover and achieving seamless handover. Delay or omission will not occur in transaction assignment, and emergency is ensured to be processed in time. A negative impact on the employee's positivity is avoided as the transaction submitted by the employee has no response in a long time.

## Description

### BACKGROUND

### Technical Field

The present invention relates to a method for managing transaction processing in a management system such as ERP and CRM

### Related Art

In an existing enterprise management system, processing for transactions such as advice/suggestions and complaints is generally arranged by a company to an assigner for assignment, and the assigner then assigns an assignee to process the transaction according to specific content of the transaction. This conventional processing method cannot satisfy the requirement of transaction privacy for the transaction submitter. For example, for a complaint transaction, if the assigner is arranged by the company, the complaint transaction may be arranged to be processed by the respondent or the subordinate of the respondent. As a result, the complaint information is likely to be obtained by the respondent, which may directly affect fair processing of the complaint transaction, and even bring an adverse effect to the complaint submitter. That result will inhibit employees from reflecting problems in the company, which is not good for the company's development.

In addition, in the conventional enterprise management system, transactions are all assigned by a fixed employee/user. When the assigner resigns or is transferred from a position, all transactions related to the assigner must be handed over correspondingly, which involves large workloads, and errors or omissions occur easily. If another assigner is not set in time, it may cause the transaction assignment to be delayed. On the one hand, that will affect the processing time effectiveness of emergency transactions (for example, advice/suggestions on solving potential safety hazards in the production workshop) and may cause unpredictable losses; on the other hand, the transaction submitted by the employee has no response in a long time, which may negatively affect the employee's positivity to submit transactions such as advice/suggestions and complaints.

Role-based access control (RBAC) is one of the most researched and mature permission management mechanisms for databases in recent years. It is considered to be an ideal candidate to replace conventional mandatory access control (MAC) and discretionary access control (DAC). The conventional discretionary access control has high flexibility but low security. The mandatory access control is highly secure but too restrictive. The role-based access control combines both above, and not only is easy to manage, but also reduces complexity, costs, and probability of errors. Therefore, it has been greatly developed in recent years. The basic idea of role-based access control (RBAC) is to divide different roles according to different functional positions in the enterprise organization view, encapsulate the access permission of database resources in roles, and allow users to indirectly access database resources by assigning different roles to the users.

A large number of tables and views are often built in large-scale application systems, which makes the management and permissions of database resources very complicated. It is very difficult for a user to directly manage the access and permissions of the database resources. It requires the user to have a very thorough understanding of the database structure and to be familiar with the use of the SQL language. Once the structure or security requirements of the application system have changed, a large number of complex and cumbersome permission changes are required, and the security vulnerabilities caused by unexpected authorization errors are very likely to occur. Therefore, designing a simple and efficient permission management method for large-scale application systems has become a common requirement for systems and system users.

The role-based permission control mechanism can manage the access permissions of the system simply and efficiently, which greatly reduces the burden and cost of the permission management of the system, and makes the permission management of the system more compliant with the business management specifications of the application system.

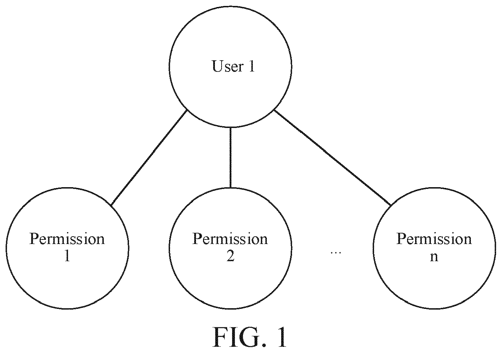

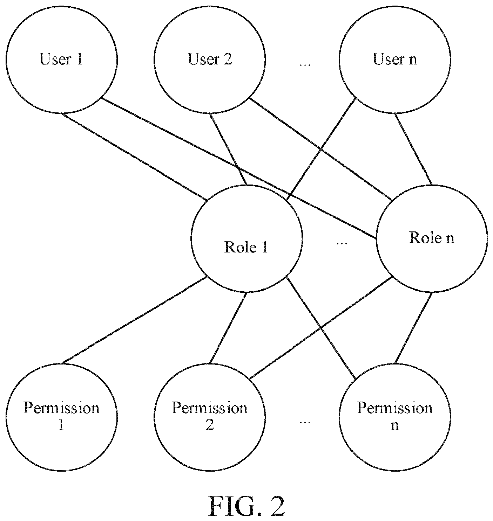

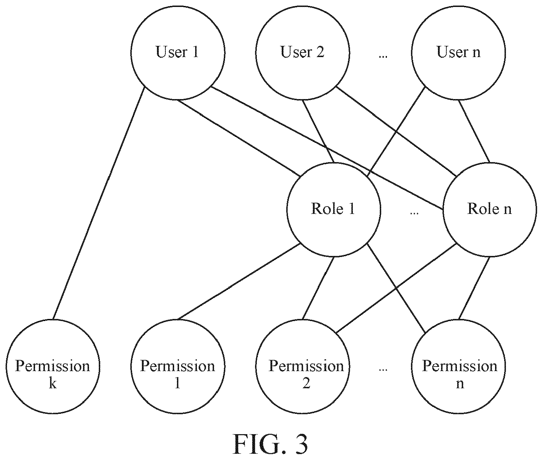

However, the conventional role-based user permission management method adopts the "role-to-user, one-to-many" relation mechanism, where the "role" has the nature of a group or class. That is, one role can simultaneously correspond to/be related to multiple users, and the role is similar to a post or a position/a type of work or other concepts. The permission authorized to a user under this relation mechanism is basically divided into the following three forms: 1. As shown in FIG. 1, the permission is directly authorized to the user, where the disadvantage is that the workload is large and the operation is frequent and cumbersome. When changes on the employee have occurred (such as transfer or resignation), all form operation permissions related to the employee shall be adjusted accordingly. Especially, for administrators in a company, many form permissions are involved. As the permission adjustment involves large workloads and is cumbersome, errors or omissions are likely to occur, affecting the normal operation of the enterprise and even causing unpredictable losses.
2. As shown in FIG. 2, the role (having the nature of a class/a group/a post/a type of work) is authorized (one role may be related to multiple users), the user obtains permissions through its role, and the approval operator is the role that has the nature of a group/a class. 3. As shown in FIG. 3, the above two methods are combined.
   In the above descriptions, as both 2 and 3 need to authorize the role that has the nature of a class/a group. The way of authorizing through the role having the nature of a class/a group/a post/a type of work has the following disadvantages: 1. Operations are difficult when the user's permission has changed. In the actual process of using a system, the user's permissions often need to be adjusted during the operation process. For example, in processing the change of an employee's permissions, when the permissions of an employee related to the role have changed, it is improper to change the permissions of the entire role due to the change of the permissions of the individual employee, because this role is also related to other employees whose permissions remain unchanged. To deal with this situation, either a new role is created to fit the employee whose permissions have changed, or permissions are directly authorized to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the system user.
   When the permissions of the employee/user have changed, either the employee/user is disengaged from the role, or a new role is added to meet the requirements of work. The defect of the first way is the same as that of the foregoing method of "direct authorization to the user". In the second way, adding a new role involves creating, relating and authorizing the role. Especially when there are many roles and many users related to the roles, it is difficult to remember which users are related to the role.
2. It is difficult to remember the specific permissions contained in a role for a long time. If the role has many permission function points, as time goes by, it is difficult to remember the specific permissions of the role, and it is even more difficult to remember the permission differences between roles with similar permissions. The permissions of similar roles are also easily confusable. If a new user needs to be related, it is impracticable to accurately determine how to select a relation.
3. Because user's permissions change, more roles will be created (if new roles are not created, direct authorization to the user will be increased greatly), and it is more difficult to distinguish specific differences between permissions of the roles.
4. When a user is transferred from a post, if many permissions of the transferred user need to be assigned to other users, it is necessary to distinguish the permissions of the transferred user and create roles to be related to the other users respectively during the processing. Such operations are not only complicated and time-consuming, but also prone to errors.

### SUMMARY

### Technical Problems

The object of the present invention is to overcome the deficiencies of the prior art, and provide a method for managing transaction processing in a management system, which provides a transaction submitter with a function to assign a certain user/employee to process, thus preventing the privacy of the transaction submitted by the submitter from leaking, and ensuring that the transaction is fairly processed.

### Solutions to Problems

### Technical Solutions

The object of the present invention is achieved by the following technical solutions: A method for managing transaction processing in a management system includes the following step: submitting a transaction-processing request by a transaction submitter, where if the transaction submitter needs to assign a certain user/employee to process the transaction, the transaction submitter appoints the user/employee to be assigned when submitting the transaction-processing request, and the transaction-processing request is assigned to the appointed user/employee; otherwise, when the transaction submitter submits the transaction-processing request, the transaction-processing request is assigned to one or more assigners who are preset, and the assigner appoints an assignee user/employee to process according to the content of the transaction-processing request submitted by the transaction submitter.

The transaction submitter appoints the user/employee to be assigned, and after the transaction-processing request is assigned to the appointed user/employee, the appointed user/employee cannot transfer the transaction to any other user/employee.

Said assigner includes one or a combination of more types of an employee, a user, a role having the nature of a group/a class, and a role having the nature of an independent individual.

Said assigner is a role having the nature of an independent individual, the role having the nature of an independent individual is different from the role having the nature of a group/a class, one role having the nature of an independent individual can only be related to a unique user during the same period, and one user is related to one or more roles having the nature of an independent individual.

A department is selected for a role when or after the role is created, and then the role belongs to the department; the role is authorized according to the work content of the role (after the user is related to the role, the user obtains permissions of the related role), a name of the role is unique under the department, and a number of the role is unique in the system; during cross-department transfer of the user, the user's relation to the role in the original department is canceled, and the user is related to a role in a new department.

A step of filling out assignment remarks is further included when the assigner appoints the assigned user/employee.

The method for managing transaction processing in a management system further includes a step in which the assigned user/employee chooses whether to accept the transaction assigned by the assigner, and if the transaction is accepted, the current assignment is finished by one of the following ways: (1) partial completion: processing of the transaction submitted by the transaction submitter is not ended yet, and subsequent processing is needed; after the assigned user/employee confirms the partial completion, the transaction submitted by the transaction submitter is returned to the assigner, waiting to be assigned by the assigner again; (2) transfer: processing of the transaction submitted by the transaction submitter is not ended yet, and subsequent processing is needed; after the assigned user/employee confirms the transfer and appoints a transferred user/employee, the transferred user/employee performs the subsequent processing; and (3) end: the transaction processing submitted by the transaction submitter is completed/finished entirely.

The method for managing transaction processing in a management system further includes a step of setting one or more supervisors, where after the transaction processing submitted by the transaction submitter is ended, the supervisor evaluates the transaction submitted by the transaction submitter.

The method for managing transaction processing in a management system further includes a step of setting one or more supervisors, where after the transaction processing submitted by the transaction submitter is ended, the supervisor evaluates the assigner and/or each employee/user who participates in transaction processing.

After the transaction processing submitted by the transaction submitter is ended, a step in which the transaction submitter evaluates the transaction-processing result is further included.

### Beneficial Effects of the Invention

### Beneficial Effects

The present invention has the following beneficial effects: (1) The present invention provides a method for managing transaction processing in a management system, which provides a transaction submitter with a function to assign a certain user/employee to process, and the transaction cannot be transferred, thus preventing the privacy of the transaction from leaking, and ensuring that the transaction is fairly processed.

For example, an employee Zhang San wants to complain about the executive deputy general manager, and the general manager can be appointed to process it. The general manager cannot transfer the transaction to any other person to process, because if the general manager transfers the transaction to any other person, the complaint information may be spread to the executive deputy general manager. Because transfer is not allowed, the transaction is only known by the complainer and the general manager, without being known by any third party. Even if the general manager needs to ask about information from the executive deputy general manager after receiving the complaint, in consideration of protecting the complainer's privacy, the general manager will skillfully ask about information indirectly, without directly disclosing the complaint issue to the executive deputy general manager.
(2) A role having the nature of an independent individual is used as the assigner. When the assigner resigns or is transferred from the post, it only needs to relate a new assigner to the assigner role, and then all current transactions can be obtained automatically, thus reducing the workloads of transaction handover and achieving seamless handover. Delay or omission will not occur in transaction assignment, and emergency is ensured to be processed in time. A negative impact on the employee's positivity is avoided as the transaction submitted by the employee has no response in a long time.
   For example, the original assigner Zhang San, who has resigned or has been transferred from the post, no longer works as the assigner. In the conventional method, all the transactions related to Zhang San need to be handed over to the new assigner Li Si, which involves large workloads, and errors or omissions occur easily. If the handover work is not completed in time, it delays transaction assignment. In the present application, the assigner is an assigner role, and all the transactions are arranged to the assigner role. When Zhang San resigns or is transferred from the post, a system administrator (or a corresponding administrator) cancels the relation between the user corresponding to Zhang San and the assigner role, and then relate the user corresponding to the successor Li Si to the assigner role. Then, Li Si automatically obtains all the current transactions of the assigner role, and handover of the assigner's transactions is achieved through the relation to the role, which has a small workload and is convenient to use.
(3) In the present application, the role is in one-to-one relation to the user. One role can only be related to a unique user during the same period, and one user is related to one or more roles. The advantage thereof is that the permissions can be gotten as long as the user is related to the role (that is, the user obtains the permissions of its related role), and changes of the role's permissions are much fewer than the changes of the user's permissions in a conventional mechanism. As there are few changes of the quantity of roles having the nature of an independent individual (the nature of a post number/a station number), despite large transfer of employees, few changes occur in the post number/station number (even there is no change within a certain period, that is, the role does not change). This greatly simplifies user's permission management and reduces system overheads.
(4) The operations such as dynamic management, recruitment, and transfer are simple, convenient, efficient and highly reliable. The application of recruitment/resignation/transfer in the permission management is simple. When an employee/a user has changed, it is unnecessary to reset permissions. It is only necessary for a user to cancel the relation or be related to the role. For the user who is no longer in the role, the relation to the role is canceled, and the user who takes over the role is related to the role of the post number. The user related to the role automatically obtains the related tasks and the operation permissions of that role, without re-authorizing the role, thus greatly improving the efficiency, security, and reliability of the system setting.
   For example, because the user Zhang San is transferred or resigns from a post, Zhang San no longer works as the role of "purchaser 3", and Zhang San then cancels the relation to "purchaser 3". Meanwhile, Li Si takes over the work as the role of "purchaser 3", and it only needs to relate Li Si to the role, so Li Si automatically obtains the operation permissions of form-field values of the role "purchaser 3".
(5) The conventional permission management mechanism defines the nature of a group, a type of work, a class or the like as the role. The role is in a one-to-many relation to the user. In the actual process of using a system, the user's permissions often need to be adjusted during the operation process. For example, in processing the change of an employee's permissions, when the permissions of an employee related to the role have changed, it is improper to change the permissions of the entire role due to the change of the permissions of the individual employee, because this role is also related to other employees whose permissions remain unchanged. To deal with this situation, either a new role is created to fit the employee whose permissions have changed, or permissions are directly authorized to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the system user.
   However, under the method of the present application, as the role is an independent individual, the object can be achieved by changing the permissions of the role. Although the method in the present application seems to increase the workload during system initialization, by means of copying or the like, the role can be created or authorized more efficiently than the conventional roles having the nature of a group/a class. As it is unnecessary to consider the commonality of the roles having the nature of a group/a class when satisfying the related users, the solutions in the present application make the permission setting clear and explicit. Especially after the system has been used for a period of time (after the permissions of the user/role have changed dynamically), the solutions in the present application can significantly improve the efficiency of permission management for the system user in using the system, make the dynamic authorization simpler, more convenient, clearer and more explicit, and improve the efficiency and reliability of the permission setting.
(6) The conventional group/class-based role authorization method is prone to errors. The method provided in the present application significantly reduces the probability of authorization errors, because the method of the present application only needs to consider the role as an independent individual, without considering the commonality of multiple users related to the role having the nature of a group under the conventional method. Even if the authorization errors occur, only the user related to the role is affected. However, in the case of the conventional role having the nature of a group, all users related to the role are affected. Even if the authorization errors occur, the correction method in the present application is simple and takes a short time, while in the case of the conventional role having the nature of a group, the commonality of the permissions of all users related to the role needs to be considered during the error correction. The modification is cumbersome, complex, and error-prone when there are many function points, and in many cases, the problem cannot be solved unless a new role is created.
(7) In the conventional group-based role authorization method, if the role has many permission function points, as time goes by, it is difficult to remember the specific permissions of the role, and it is even more difficult to remember the permission differences between roles with similar permissions. If a new user needs to be related, it cannot be accurately determined how to select a relation. In the method of the present application, the role itself has the nature of a post number/a station number, such that the selection can be made easily.
(8) When a user is transferred from a post, if many permissions of the transferred user need to be assigned to other users, in processing, it is necessary to distinguish the permissions of the transferred user and create roles to relate to other users respectively. The operations are complicated, time-consuming, and prone to errors.

The method in the present application is as follows: The transferred user is related to several roles. When the user is transferred, the relation between the user and the roles in the original department is first canceled (the canceled roles may be re-related to other users), and then the user is related to a role in a new department. The operation is simple and not error-prone.

### BRIEF DESCRIPTION OF THE DRAWINGS

### DESCRIPTION OF THE DRAWINGS

FIG. 1 is a schematic diagram in which a system directly authorizes a user in the prior art;
FIG. 2 is a schematic diagram in which a system authorizes a role having the nature of a group/a class in the prior art;
FIG. 3 is a schematic diagram in which a system both directly authorizes a user and a role having the nature of a group/a class in the prior art; and
FIG. 4 is a schematic diagram in which a system authorizes a user through a role having the nature of an independent individual according to the present invention.

### DETAILED DESCRIPTION

### Description of Embodiments

The technical solutions of the present invention will be further described in detail below with reference to the figures, but the protection scope of the present invention is not limited to the following descriptions.

[Embodiment 1] A method for managing transaction processing in a management system, where the transaction refers to one or more types of a question, an opinion, a suggestion, a complaint, and a work task, includes the following step: submitting a transaction-processing request by a transaction submitter: (1) if the transaction submitter needs to assign a certain user/employee to process the transaction, the transaction submitter appoints the user/employee to be assigned when submitting the transaction-processing request, and the transaction-processing request is assigned to the appointed user/employee. In this manner, the appointed user/employee cannot reject/return (but can only accept/sign) the transaction, and can only finish the current appointment of the transaction submitter by means of "end". Even if the user/employee cannot process the transaction, it is also necessary to fill out a cause description and end (that is, select or confirm "end") the transaction processing. If the user/employee appointed by the transaction submitter cannot transfer the transaction but thinks that the transaction should not be processed by himself/herself (or thinks that the submitter can ask another person to process the transaction), the user/employee can make a response as follows: to ask sb to process it (this is also a processing result), and then conform that the transaction processing is ended. After the transaction-processing request submitted by the submitter is ended, the transaction submitter may grade the processing result of the transaction. The transaction submitter may submit another transaction request according to the situation, and appoint another employee/user to process, or adopt the mode (2) to carry out the subsequent processing.

Further, the user/employee appointed by the transaction submitter may reject/return/not process the transaction submitted by the transaction submitter (for example, the chairman receives many information/transactions, where some are interference information, and for some information/transactions, the chairman only needs to figure out the causes and the like, but does not need to carry out further processing).

Further, it can be set that which users/employees appointed by the transaction submitter can reject/return/not process the transaction submitted by the transaction submitter; then, the users/employees authorized with this permission can reject/return/not process the transaction submitted by the submitter (for example, it can be set that the chairman has the permission).

Further, it can be set that which transaction submitters/assignees/employees participating in transaction processing/transactions submitted by a person or an employee/assigners/appointed users or employees are not evaluated (for example, it can be set that the appointed user/employee "Chairman: Zhang San" is not evaluated.

(2) If the transaction submitter does not know by whom the transaction is processed or does not want to appoint a transaction processor, when the transaction submitter submits the transaction-processing request, the transaction-processing request is assigned to one or more assigners who are preset, and the assigner appoints an assignee user/employee to process according to the content of the transaction-processing request submitted by the transaction submitter. The assigner can further fill out assignment remarks when selecting an assignee user/employee, to make a related description about the transaction.

The assigned user/employee can choose whether to accept the transaction assigned by the assigner (accept/sign, return/reject). If transaction is accepted (the user/employee assigned by the assigner can choose, during the assignment, whether to accept the transaction assigned by the assigner, and when the transaction is transferred, the transferred user/employee can also choose whether to accept the transaction transferred by the transferred user/employee; however, the user/employee appointed by the transaction submitter when submitting the transaction-processing request can only accept/sign the transaction, but cannot return/reject the transaction), the current assignment is finished in one of the following three modes (the user/employee appointed by the transaction submitter when submitting the transaction-processing request can only end the appointment by the transaction submitter in the following "end" mode): partial completion: processing of the transaction submitted by the transaction submitter is not ended yet, and subsequent processing is needed; after the assigned user/employee confirms the partial completion, the transaction submitted by the transaction submitter is returned to the original assigner, waiting to be assigned by the original assigner to another user/employee.

(2) Transfer: processing of the transaction submitted by the transaction submitter is not ended yet, and subsequent processing is needed; after the assigned user/employee confirms the transfer and appoints a transferred user/employee, the transferred user/employee performs the subsequent processing. The transferred user/employee may transfer the transaction again (the transferred user/employee can also end the current transfer in one of the three modes: "partial completion, transfer, and end". The three modes are as follows: "1. partial completion: processing of the transaction submitted by the transaction submitter is not ended yet, and subsequent processing is needed; after the transferred user/employee confirms the partial completion, the transaction submitted by the transaction submitter is returned to the original assigner, waiting to be assigned by the original assigner to another user/employee; 2. transfer: processing of the transaction submitted by the transaction submitter is not ended yet, and subsequent processing is needed; after the transferred user/employee confirms the transfer and appoints another transferred user/employee, the other transferred user/employee performs the subsequent processing; and 3. end: the transaction processing submitted by the transaction submitter is completed/finished entirely, and the transferred user/employee conforms the end; in this case, the transaction processing is finished here, and no subsequent processing is performed").

(3) End: the transaction processing submitted by the transaction submitter is completed/finished entirely. The end does not necessarily mean that the transaction has been solved, and the transaction may also be determined as end without being processed. That is, the transaction is ended or the transaction processing is finished here. After the assigned user/employee confirms the end, the transaction processing is finished here, and no subsequent processing is performed (the user/employee appointed by the transaction submitter when submitting the transaction-processing request can only finish the appointment by the transaction submitter in the mode of "end", and if the user/employee appointed by the transaction submitter when submitting the transaction-processing request confirms the "end", the transaction processing submitted by the transaction submitter is completed/finished entirely. The end does not necessarily mean that the transaction has been solved, and the transaction may also be determined as end without being processed. That is, the transaction is ended or the transaction processing is finished here. After the appointed user/employee confirms the end, the transaction processing is finished here).

Further, the assigner can select other transactions/information/data and the like relevant to the submitted transaction which are referable within his/her permission, to be related to the submitted transaction, so that the processor who processes the submitted transaction can refer to the relevant information when processing the submitted transaction, which helps to process the submitted transaction. For example, after processing of a transaction is ended, the transaction submitter is not satisfied (it is possible that the transaction is not processed or the transaction submitter is not satisfied about the processing result). The original transaction submitter initiates the transaction again and submits it to the assigner. In this case, the assigner can select the transaction previously submitted by the submitter to be related to the transaction submitted this time, so that the subsequent processor can know enough about the historical relevant conditions about the submitted transaction.

When the assigned user/employee or the transferred user/employee/employee or the appointed user/employee processes the transaction (after accepting the assignment/transfer/appointment, before the assigned user/employee or the transferred user/employee selects one of the above three modes to finish the assignment or transfer, and before the appointed user/employee selects the "end" mode to finish the appointment), transaction processing information and relevant information may be filled out and saved, so that the relevant personnel can know the procedure and details of the transaction processing.

Correspondingly, the transaction-processing procedure received by the assigner includes: (1) unprocessed procedure, including assigned but unprocessed procedure and unassigned procedure; (2) processed but unfinished procedure; (3) ended procedure: processing of the transaction submitted by the transaction submitter has been ended. The processing status of the submitted transaction can also be displayed by marking the transaction processing degree or the like, which helps to understand the processing status of the submitted transaction conveniently and quickly, especially understand/supervise that some transactions are not processed but still chosen to be ended.

The transaction submitter may be an employee, a user, a role having the nature of a group/a class, a role having the nature of an independent individual, and the like. The transaction submitter can see all transactions submitted by himself/herself, as well as the processing procedure and detailed processing record of each transaction (in the transaction processing procedure, the procedure of transaction processing needs to be fed back to the transaction submitter at any time, and the information such as processing records can be filled out in the processing link). Further, it may also be set that the transaction submitter can only see the necessary processing procedure information, but cannot see the sensitive processing records. The assigner can view the content of all transactions assigned by himself/herself, processing procedures, and relevant processing information, and cannot view the transactions not assigned by himself/herself. Further, it may also be set that the assigner can only see the necessary processing procedure information, but cannot see the sensitive processing records. After the transaction processing is ended, the assigner can either see all information about the transaction assigned by himself/herself (transaction content, processing procedure, and relevant processing information), or can see nothing about the transaction (transaction content, processing procedure, and relevant processing information). Alternatively, the assigner can see the content of the assigned transaction, but cannot see the processing procedure and relevant processing information.

This embodiment provides a transaction submitter with a function to assign a certain user/employee to process, and the transaction submitter appoints the user/employee to be assigned. After the transaction-processing request is assigned to the appointed user/employee, the appointed user/employee cannot transfer the transaction to any other user/employee, thus preventing the privacy of the transaction submitted by the submitter from leaking, and ensuring that the transaction is fairly processed.

For example, an employee Zhang San wants to complain about the executive deputy general manager, and the general manager can be appointed to process it. The general manager cannot transfer the transaction to any other person to process, because if the general manager transfers the transaction to any other person, the complaint information may be spread to the executive deputy general manager. Because transfer is not allowed, the transaction is only known by the complainer and the general manager, without being known by any third party. Even if the general manager needs to ask about information from the executive deputy general manager after receiving the complaint, in consideration of protecting the complainer's privacy, the general manager will skillfully ask about information indirectly, without directly disclosing the complaint issue to the executive deputy general manager.

[Embodiment 2] A supervisor is set, and after the processing of the entire transaction submitted by the transaction submitter is ended, the supervisor evaluates the transaction submitted by the transaction submitter. The supervisor can further evaluate the assigner and/or each employee/user participating in transaction processing. The evaluation mode includes one or more types of grading, satisfaction/dissatisfaction evaluation, and the like. The perspective of the evaluation includes one or more types of attitude, processing efficiency, result, procedure, and the like.

The supervisor grades transactions, mainly because some transactions have positive effects on the company. The transaction cannot be graded until its processing is ended, because the transaction may seem to be valuable at the beginning, but after being analyzed and processed by the processor, the transaction turns out to be valueless in fact. The score of the transaction can only be 0 or a higher score, but cannot be a negative score. The sore of the employee/user participating in transaction processing can be a negative score.

After the processing of the entire transaction submitted by the transaction submitter is ended, the transaction submitter can also evaluate the transaction-processing result and evaluate the efficiency of transaction processing, the result satisfaction, and the like.

The setting may also be as follows: the supervisor can neither evaluate the user/employee directly appointed by the transaction submitter and the processing procedure thereof nor evaluate the transaction, because the evaluation may leak privacy. Definitely, the setting may also be as follows according to requirements: the supervisor can evaluate the user/employee directly appointed by the transaction submitter (the setting may also be as follows: which assigners/which transaction processors/which users related to transaction processing roles/which employees corresponding to the users related to the transaction processing roles are set for the supervisor) and the processing procedure thereof, and can also evaluate the transaction (the corresponding transaction).

[Embodiment 3] The assigner includes an employee, a user, a role having the nature of a group/a class, a role having the nature of an independent individual, and the like.

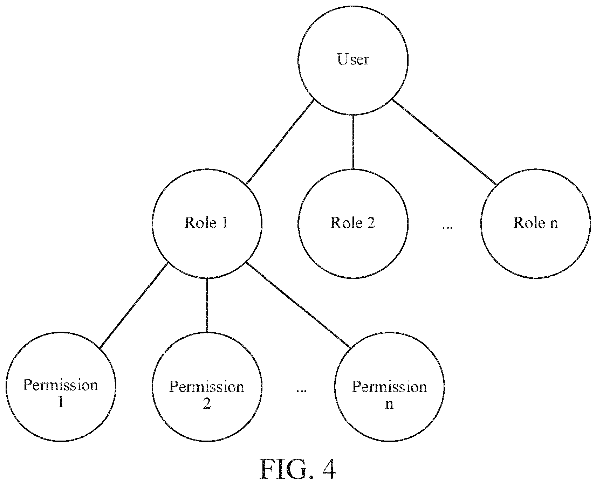

In this embodiment, the assigner is a role having the nature of an independent individual, and the role having the nature of an independent individual is different from a role having the nature of a group/a class. As shown in FIG. 4, one role having the nature of an independent individual can only be related to a unique user during the same period, and one user is related to one or more roles having the nature of an independent individual; one user corresponds to one employee, and one employee corresponds to one user. The employee determines (obtains) permissions through the role (the role having the nature of an independent individual) related to the user corresponding to the employee. The employee and the user are in a one-to-one relation with each other and are permanently bound. After a user corresponds to an employee, the user belongs to the employee, and the user can no longer be related to other employees; if the employee resigns, the user cannot correspond to other employees either. After the employee is recruited again, the employee still uses the original user.

A department is selected for a role when or after the role is created, and then the role belongs to the department; the role is authorized according to the work content of the role, the name of the role is unique under the department, and the number of the role is unique in the system; during cross-department transfer of the user, the user's relation to the role in the original department is canceled, and the user is related to a role in a new department.

When the transaction submitter is definite about a processor of the transaction, a user/an employee rather than a role is appointed to process its transaction, because if a role is appointed, one role is still possibly related to multiple users/employees in employees' changing process involved in the long-term operation of the enterprise, and the privacy of the transaction cannot be ensured. Therefore, only a definite user/employee is appointed to process such transactions.

A role having the nature of an independent individual is used as the assigner. When the assigner resigns or is transferred from the post, it only needs to relate a new assigner (a user corresponding to the assigner) to the assigner role, and then all current transactions can be gotten automatically, thus reducing the workloads of transaction handover and achieving seamless handover. Delay or omission will not occur in transaction assignment, and emergency is ensured to be processed in time. A negative impact on the employee's positivity is avoided as the transaction submitted by the employee has no response in a long time.

For example, the original assigner Zhang San, who has resigned or has been transferred from the post, no longer works as the assigner. In the conventional method, all the transactions related to Zhang San need to be handed over to the new assigner Li Si, which involves large workloads, and errors or omissions occur easily. If the handover work is not completed in time, it delays transaction assignment. In the present application, the assigner is an assigner role, and all the transactions are arranged to the assigner role. When Zhang San resigns or is transferred from the post, a system administrator (or a corresponding administrator) cancels the relation between the user corresponding to Zhang San and the assigner role, and then relate the user corresponding to the successor Li Si to the assigner role. Then, Li Si automatically obtains all the current transactions of the assigner role. Handover of the assigner's transactions is achieved through the relation to the role, which has a small workload and is convenient to use.

In the following, the advantages of authorizing the user by using the role having the nature of an independent individual are analyzed: The user determines (obtains) permissions through its relation to the role. If the permissions of the user need to be modified, the permissions owned by the role are adjusted to achieve the purpose of changing the permissions of the user related to the role. Once the user is related to the role, the user owns all the operation permissions of the role.

The role is in a one-to-one relation to a user (when the role is related to one user, other users can no longer be related to that role; and if the role is not related to the user, the role can be selected to be related to other users; that is, during the same period, one role can only be related to one user). A user is in a one-to-many relation to roles (one user can be related to multiple roles at the same time).

Definition of a role: A role does not have the nature of a group/a class/a category/a post/a position/a type of work or the like, but has a non-collective nature. The role is unique and is an independent individual. Applied in an enterprise or an institution, the role is equivalent to a post number (the post number herein is not a post, and one post may have multiple employees at the same time, but one post number can only correspond to one employee during the same period).

For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The relation between users and roles is as follows: if Zhang San, the company's employee, serves as a deputy general manager 2 of the company and also serves as a manager of Beijing sales department I, the roles to which Zhang San needs to be related are the deputy general manager 2 and the manager of Beijing sales department I, and Zhang San owns the permissions of the two roles.

The concept of conventional roles is a group/a class/a post/a position/a type of work in nature, and one role can correspond to multiple users. However, in the present application, the concept of "role" is equivalent to a post number/a station number, and is also similar to the role in a film and television drama: one role (in childhood, juvenile, middle-age...) can be played by only one actor or actress during the same period, but one actor or actress may play multiple roles.

After the role is created, a user may be related to the role in the process of creating the user, or may be related to the role at any time after the user is created. After the user is related to the role, the user can be released from the relation to the role at any time, and the relation between the user and another role may be created at any time.

The role is composed of: a post name + a post number, for example, a workshop worker 1, a workshop worker 2, a workshop worker 3, and so on. The role is an independent individual, and is equivalent to the concept of a post number or a station number, but different from the role in a conventional permission management system. The concept of the role in the conventional system has the nature of a group/a class such as a post/a position/a type of work or the like.

The following example shows the relationship among an employee, a user, and a role after Zhang San, an employee, enters a company as follows: 1. Recruiting: after the employee is recruited, the role of the corresponding post number/station number is directly selected for the user (employee) to be related. For example, when Zhang San has joined the company (the company has assigned a user Zhang San for Zhang San) and works at the sales department I to be responsible for the sales of refrigerator products in Beijing area (the corresponding role is "sales engineer 5" under the sales department I), then the user Zhang San directly selects and is related to the role "sales engineer 5".
2. Adding position: After Zhang San has worked for a period of time, the company further arranges Zhang San to be responsible for the sales of TV products in Beijing area (the corresponding role is "sales engineer 8" under the sales department I) and to serve as the supervisor of an after-sales department (the corresponding role is "after-sales supervisor 1"). Therefore, two roles, that is, "sales engineer 8" under the sales department I and "after-sales supervisor 1" under the after-sales department, are additionally related to the user Zhang San. In this case, the employee Zhang San is related to three roles: "sales engineer 5" and "sales engineer 8" under the sales department I, and "after-sales supervisor 1" under the after-sales department. Therefore, the user Zhang San owns the permissions of the three roles.
3. Reducing position: After a while, the company has decided to let Zhang San serve as an after-sales department manager (corresponding to a role "after-sales manager" under the after-sales department) without taking up other positions. Therefore, the user Zhang San is related to the role "after-sales manager" under the after-sales department, and is released from the relation to the previous three roles ("sales engineer 5" and "sales engineer 8" under the sales department I, and "after-sales supervisor 1" under the sales department). In this case, the user Zhang San only owns the permissions of the role "after-sales manager" under the after-sales department.
4. Adjusting permissions of a role (adjusting the permissions of the role itself): if the company has decided to add permissions to the after-sales manager, the permissions only need to be added to the role of the after-sales manager. With the increase of the permissions of the role of the after-sales manager, the permissions of the user Zhang San are also increased.
5. Resignation: After one year, Zhang San resigns. It is only necessary to cancel the relation between the user Zhang San and the role "after-sales manager" under the after-sales department.

For example, during the dynamic operation of the company, recruiting and resigning of staff often occur continuously, but post numbers/station numbers seldom change (or even remain unchanged within a period of time).

The conventional authorization method: In the case of a large quantity of system function points, authorizing the conventional roles that have the nature of a group/a class involves a large and cumbersome workload and is very error-prone, and errors are not easily detectable in a short time and tend to cause loss to a system user.

The authorization method of the present application: in the present application, the role having the nature of a post number/a station number is authorized, and the user is related to the role to determine (obtain) permissions. Therefore, the permissions of the user are controlled by only a simple user-role relation. Controlling the permissions is simple, easily operable, clear, and explicit, thereby significantly improving the efficiency and reliability of authorization.

The above is only a preferred embodiment of the present invention, and it should be understood that the present invention is not limited to the forms disclosed herein, and is not to be construed as being limited to the other embodiments, but may be used in various other combinations, modifications and environments. Modification can be made by the techniques or knowledge of the above teachings or related art within the scope of the teachings herein. All changes and modifications made by those skilled in the art without departing from the spirit and scope of the present invention are intended to be within the protection scope of the appended claims.

## Claims

1. A method for managing transaction processing in a management system, comprising the following step:
submitting a transaction-processing request by a transaction submitter, wherein if the transaction submitter needs to assign a certain user/employee to process the transaction, the transaction submitter appoints the user/employee to be assigned when submitting the transaction-processing request, and the transaction-processing request is assigned to the appointed user/employee; otherwise, when the transaction submitter submits the transaction-processing request, the transaction-processing request is assigned to one or more assigners who are preset, and the assigner appoints an assignee user/employee to process according to the content of the transaction-processing request submitted by the transaction submitter.

2. The method for managing transaction processing in a management system according to claim 1, wherein the transaction submitter appoints the user/employee to be assigned, and after the transaction-processing request is assigned to the appointed user/employee, the appointed user/employee cannot transfer the transaction to any other user/employee.

3. The method for managing transaction processing in a management system according to claim 1, wherein said assigner comprises one or a combination of more types of an employee, a user, a role having the nature of a group/a class, and a role having the nature of an independent individual.

4. The method for managing transaction processing in a management system according to claim 3, wherein said assigner is a role having the nature of an independent individual, the role having the nature of an independent individual is different from the role having the nature of a group/a class, one role having the nature of an independent individual can only be related to a unique user during the same period, and one user is related to one or more roles having the nature of an independent individual.

5. The method for managing transaction processing in a management system according to claim 4, wherein a department is selected for a role when or after the role is created, and then the role belongs to the department; the role is authorized according to the work content of the role, a name of the role is unique under the department, and a number of the role is unique in the system; during cross-department transfer of the user, the user's relation to the role in the original department is canceled, and the user is related to a role in a new department.

6. The method for managing transaction processing in a management system according to any one of claims 1 to 5, wherein a step of filling out assignment remarks is further comprised when the assigner appoints the assigned user/employee.

7. The method for managing transaction processing in a management system according to claim 1, further comprising a step in which the assigned user/employee chooses whether to accept the transaction assigned by the assigner, and if the transaction is accepted, the current assignment is finished by one of the following ways:
(1) partial completion: processing of the transaction submitted by the transaction submitter is not ended yet, and subsequent processing is needed; after the assigned user/employee confirms the partial completion, the transaction submitted by the transaction submitter is returned to the assigner, waiting to be assigned by the assigner again;
(2) transfer: processing of the transaction submitted by the transaction submitter is not ended yet, and subsequent processing is needed; after the assigned user/employee confirms the transfer and appoints a transferred user/employee, the transferred user/employee performs the subsequent processing; and
(3) end: the transaction processing submitted by the transaction submitter is completed/finished entirely.

8. The method for managing transaction processing in a management system according to claim 1, further comprising a step of setting one or more supervisors, wherein after the transaction processing submitted by the transaction submitter is ended, the supervisor evaluates the transaction submitted by the transaction submitter.

9. The method for managing transaction processing in a management system according to claim 1, further comprising a step of setting one or more supervisors, wherein after the transaction processing submitted by the transaction submitter is ended, the supervisor evaluates the assigner and/or each employee/user who participates in transaction processing.

10. The method for managing transaction processing in a management system according to claim 1, wherein after the transaction processing submitted by the transaction submitter is ended, a step in which the transaction submitter evaluates the transaction-processing result is further comprised.
